# EUROPÄISCHE PATENTSCHRIFT

(11) **EP 3 923 696 B1**
(45) Veröffentlichungstag und Bekanntmachung des Hinweises auf die Patenterteilung: **26.03.2025**
(21) Anmeldenummer: 20705314.1
(22) Anmeldetag: 10.02.2020
(51) Int. Cl.: A01D 34/00, A01D 34/44, A01D 34/74, A01D 34/84, A01D 34/86

(54) **VORRICHTUNG, VORZUGSWEISE AUTONOME ROBOTERVORRICHTUNG, ZUM MÄHEN VON GRAS**
APPARATUS, PREFERABLY AUTONOMOUS ROBOT APPARATUS, FOR MOWING GRASS
DISPOSITIF, DE PRÉFÉRENCE DISPOSITIF ROBOTIQUE AUTONOME, DESTINÉ À TONDRE LE GAZON

(30) Priorität: 11.02.2019 DE 102019103335
(43) Veröffentlichungstag der Anmeldung: 22.12.2021
(73) Patentinhaber: Brüggli, 8590 Romanshorn (CH)
(72) Erfinder: EVERTZ, Jörg, 8903 Birmensdorf (CH); HASENFRATZ, Simon, 8047 Zürich (CH); WERNER, Uwe, 8825 Hütten (CH)
(74) Vertreter: v. Bezold & Partner Patentanwälte - PartG mbB
(86) Internationale Anmeldenummer: PCT/EP2020/053255
(87) Internationale Veröffentlichungsnummer: WO 2020/165068

(56) Entgegenhaltungen:
- EP-A1- 1 597 954
- EP-A1- 2 241 172
- WO-A1-2011/115536
- CN-A- 107 750 585
- GB-A- 2 482 467
- US-A- 3 381 456
- US-A- 3 972 381
- US-A- 4 531 589
- US-A- 4 573 306
- US-B1- 6 321 515
- US-B1- 7 117 660

## Beschreibung

Die Erfindung betrifft eine Vorrichtung, vorzugsweise eine autonome Robotervorrichtung, zum Mähen von Gras, mit mehreren Schneideinrichtungen zum Mähen des Grases.

Typischerweise werden heutzutage Obstplantagen, wie beispielsweise Apfelbaumplantagen und Weintraubenplantagen, alle drei bis vier Wochen von einem Traktor mit verbundener Mähvorrichtung / Mulchvorrichtung gemäht. Typischerweise sind die Bäume oder Sträucher der Plantagen in nebeneinanderliegenden Reihen (so genannte Reihenkulturen) angeordnet. Der Obstbauer durchfährt mit dem Traktor nacheinander die Räume zwischen den nebeneinanderliegenden Reihen und mäht dabei das Gras. Dies erfordert einen erheblichen Zeit- und Kostenaufwand für den Obstbauern. Die Mäharbeiten und Mulcharbeiten sind notwendig, damit es bei der Ernte zu keinen Verzögerungen kommt und die Wege zwischen den Bäumen oder Sträuchern problemlos befahren werden können.

Im Stand der Technik sind Robotervorrichtungen zum Mähen von Gras und/oder zum Einsatz in der Landwirtschaft bekannt. Letztlich weisen diese Robotervorrichtung jedoch verschiedenste Unzulänglichkeiten auf, sodass diese derzeit kaum in der Landwirtschaft eingesetzt werden.

Die US 7,117,660 B1 offenbart einen selbstfahrenden Rasenmäher mit einem Mikroprozessor und mindestens einem Schneidwerkzeug, wobei ein elastisches Spannelement vorgesehen ist, das mit dem Rahmen des Rasenmähers und dem mindestens einen Schneidwerkzeug verbunden ist. Eine zentrale automatische Einstellung der Höhe des Schneidwerkzeugs in Bezug auf den Boden ist ebenfalls vorgesehen. Die Schneidwerkzeuge bestehen aus einer Drehscheibe mit einziehbaren Messern, die mit einem Anschlag unter der Unterseite in Form einer zentralen Verlängerung versehen sind, die mit dem Boden in Berührung kommen kann.

Die US 6,321,515 B1 offenbart einen selbstfahrenden Rasenmäher und ein Verfahren zur Verwendung der Maschine. Die Maschine umfasst einen beweglichen Rahmen mit mindestens einem Antriebsrad und an seiner Unterseite mindestens zwei nebeneinander angeordneten Schneidwerkzeugen, die jeweils einem Elektromotor zugeordnet sind. Ein Trägerchassis ist vorne mechanisch mit fünf identischen Schneidköpfen verbunden, die sich auf zwei Linien befinden und in Bezug auf die Senkrechte zur Bewegungsrichtung versetzt sind, um einen wesentlichen Teil der Breite des Mähers abdecken zu können. Es sind ferner flexible Befestigungsmittel für die Schneidköpfe und zwei von Elektromotoren angetriebene Antriebsräder umfasst.

Die EP 2 241 172 A1 offenbart einen Rasenmäher mit einem kastenförmigen Körper, der eine Vielzahl von Antriebsrädern aufweist, die an der Unterseite mit demselben Körper verbunden sind, um ihn entlang einer zu mähenden Grasfläche zu bewegen. Mittel zum Bewegen der Antriebsräder sind innerhalb des kastenförmigen Körpers angeordnet. Eine Vielzahl von Schneidelementen sind an der Unterseite mit dem Rasenmäher verbunden. Mindestens eines der Schneidelemente ist um mindestens eine Gelenkachse beweglich, damit die Schneidelemente dem Umriss der Grasfläche folgen und die Schnitthöhe konstant halten können.

Nachteilig an bekannten Vorrichtungen kann beispielsweise sein, dass das Schnittergebnis über mehrere Schneideinrichtungen hinweg nicht gleichmäßig ist, eine ungleichmäßige Verteilung des geschnitten Rasens durch die Mähvorrichtung erfolgt und/oder die Mähvorrichtung zum Aufbocken neigt, wenn sie Hindernisse berührt.

Der Erfindung liegt die Aufgabe zu Grunde, eine alternative und/oder verbesserte Vorrichtung zum Mähen von Gras zu schaffen.

Die Aufgabe wird gelöst durch die Merkmale des unabhängigen Anspruchs 1. Vorteilhafte Weiterbildungen sind in den abhängigen Ansprüchen und der Beschreibung angegeben.

Die Erfindung schafft eine (z. B. selbstfahrende) Vorrichtung, vorzugsweise eine autonome Robotervorrichtung, zum Mähen von Gras. Die Vorrichtung weist mehrere (z. B. angetriebene) Schneideinrichtungen zum Mähen des Grases, auf. Die Vorrichtung weist mehrere Tragarme, die versetzt zueinander bezüglich einer Querachse der Vorrichtung angeordnet sind, jeweils einzeln auf- und abschwenkbar (hoch- und runterschwenkbar) gelagert sind (z. B. an einem Hauptkörper oder Rahmen der Vorrichtung) sowie jeweils eine der mehreren Schneideinrichtungen tragen, auf. Die Vorrichtung weist mehrere Stützelemente auf, die jeweils einen der mehreren Tragarme an einem Untergrund abstützen und bezüglich einer Vorwärtsfahrtrichtung der Vorrichtung vor (und zweckmäßig beabstandet zu) der jeweiligen Schneideinrichtung angeordnet sind.

Die Vorrichtung kann den Vorteil aufweisen, dass die vorauseilenden Stützelemente nicht durch von den Schneideinrichtungen geschnittenes Gras gehen und somit kein Schnittgut vor sich herschieben, was zu einer ungewünschten Haufenbildung oder damit letztlich sogar zu einem Aufbocken der Vorrichtung führen könnte. Ferner wirkt sich ein möglichst großer Abstand zwischen der Schwenklagerung der Tragarme und den Stützelementen ganz allgemein vorteilhaft auf ein Risiko zum Aufbocken der Vorrichtung aus. Die Einzelaufhängung der Schneideinrichtungen kann vorteilhaft hinsichtlich eines gleichmäßigen Schnittergebnisses sein, da zweckmäßig eine Auf- und Abschwenkbewegung der Tragarme und somit der Schneideinrichtungen einer Kontur des Untergrunds unter dem jeweiligen Stützelement folgt.

Zweckmäßig sind die Schneideinrichtungen angetriebene Schneideinrichtungen, die bspw. jeweils einen eigenen Antriebsmotor (z. B. Elektromotor) aufweisen.

In einem Ausführungsbeispiel sind die mehreren Stützelemente als, vorzugsweise hornförmige und/oder gekrümmte, Gleitkufen ausgebildet. Gleitkufen können bspw. gegenüber Rädern als Stützelemente den Vorteil haben, dass sie sich nicht mit Dreck und Rasen zusetzen und einfach herstellbar sind.

In einem weiteren Ausführungsbeispiel sind die mehreren Stützelemente drehbar mit dem jeweiligen Tragarm verbunden. Vorzugsweise kann eine jeweilige Drehachse der mehreren Stützelemente parallel oder schräg zu einer Hochachse der Vorrichtung verlaufen und besonders bevorzugt bezüglich der Vorwärtsfahrtrichtung nach vorne geneigt sein (z. B. in einem Winkel zwischen 0° und 15° zur Hochachse). Die drehbare Verbindung ermöglicht, dass die Stützelemente sich bei Kurvenfahrten mitdrehen oder bei Rückwärtsfahrten umdrehen können. Eine leichte Neigung zur Hochachse kann das Risiko des Aufbockens der Vorrichtung verringern. Bei Rückwärtsfahren der Vorrichtung, z. B. wegen eines Hindernisses, können durch die nach vorne geneigten Drehachse der Stützelemente die Tragarme angehoben werden. So kann sich die Vorrichtung einfacher von einem im Schneidbereich vorhandenen Hindernis freifahren. Bei seitlichem Verschwenken bzw. Lenken der Vorrichtung kann das leichte Anheben ebenfalls vorteilhaft sein, um ein unbeabsichtigtes, zu tiefes Schneiden (Gras lokal sehr kurz/zu kurz, oder gar ins Erdreich geschnitten) zu vermeiden, insbesondere wenn durch Traktoren entstandene Vertiefungsrillen/Fahrspuren vorhanden sind.

In einem weiteren Ausführungsbeispiel weist die Vorrichtung ferner einen Hauptkörper oder Rahmen auf, an dem die mehreren Tragarme jeweils einzeln auf- und abschwenkbar gelagert sind und/oder an dem Antriebselemente, vorzugsweise Räder oder Raupenantriebe, angebracht sind, die trieblich mit einer Antriebseinheit (z. B. Elektromotor) der Vorrichtung verbunden sind.

In einer Ausführungsform sind die Schwenklagerungen und die mehreren Stützelemente jeweils an entgegengesetzten Endbereichen der mehreren Tragarme angeordnet. Damit kann ein Abstand zwischen den Schwenklagerungen und den Stützelementen möglichst groß werden, was das Risiko des Aufbockens der Vorrichtung verringern kann.

In einer weiteren Ausführungsform weisen die mehreren Schneideinrichtungen jeweils mindestens ein Schneidelement (z. B. Schneidmesser) auf, das um eine Schneidachse der jeweiligen Schneideinrichtung drehbar ist. Vorzugsweise verläuft die Schneidachse schräg bezüglich einer Hochachse der Vorrichtung. Besonders bevorzugt ist die Schneidachse bezüglich der Vorwärtsfahrtrichtung nach vorne geneigt (z. B. in einem Winkel zwischen 0° und 15° zur Hochachse). Durch die Neigung der Schneideinrichtungen kann ein Schnitt des Rasens nur im vorderen Bereich der jeweiligen Schneideinrichtung erfolgen, jedoch nicht dahinter. Die Schneidelemente berühren somit den bereits gemähten Rasen nicht oder kaum, sodass weniger (zum Beispiel elektrische) Energie zum Antreiben der Schneidelemente notwendig sein kann.

Zweckmäßig kann die Schneidachse der Schneideinrichtung einer Drehachse einer Antriebseinheit (z. B. Elektromotor) der Schneideinrichtung entsprechen.

In einer weiteren Ausführungsform weisen die mehreren Schneideinrichtungen jeweils einen feststehenden Teil und einen drehbaren Teil auf, die durch eine Trennfuge voneinander beabstandet sind. Vorzugsweise verjüngt sich ein an die Trennfuge angrenzender Bereich des feststehenden Teils in einer Richtung weg von der Trennfuge und/oder ein sich an die Trennfuge angrenzender Bereich des drehbaren Teils verjüngt sich in einer Richtung weg von der Trennfuge. Diese Konfiguration kann einen (Um-) Wickelschutz der Trennfuge bilden, die ein Risiko des Festsetzens des drehbaren Teils durch Schnittgut verringert kann. So kann auch eine dauerhafte Verschmutzung verhindert werden.

Beispielsweise kann sich ein Außendurchmesser des feststehenden Teils und ein Außendurchmesser des drehbaren Teils zur Trennfuge hin erweitern.

In einer Ausführungsvariante weist die Vorrichtung ferner mehrere Tragarm-Vorspannelemente, vorzugsweise Federn, auf, die jeweils einem der mehreren Tragarme zugeordnet sind und den jeweiligen Tragarm zum Hochschwenken vorspannen. Damit können vorzugsweise das jeweilige Stützelement und/oder der Untergrund entlastet werden.

Zweckmäßig können die Tragarm-Vorspannelemente jeweils an der Schwenklagerung der mehreren Tragarme angeordnet sein.

In einer weiteren Ausführungsvariante weist die Vorrichtung ferner mindestens einen taktilen Sensorarm auf, der auf einer Längsaußenseite der Vorrichtung zur taktilen Erfassung eines Abstands zwischen der Vorrichtung und einem Objekt (z. B. Pflanze, Baum) neben der Vorrichtung, vorzugsweise ein- und ausschwenkbar, angeordnet ist. Vorzugsweise ist je mindestens ein taktiler Sensorarm an beiden Längsaußenseiten der Vorrichtung umfasst. Ein Vorteil des taktilen Sensorarms gegenüber bspw. optischen Systemen zur Abstandsüberwachung ist bspw. die geringe Empfindlichkeit gegen Verschmutzung. Bei dem taktilen Sensorarm handelt es sich um ein Sensorsystem, das nicht nur binär angibt, ob ein Kontakt mit einem Objekt stattgefunden hat. Stattdessen ermöglicht der taktile Sensorarm eine Ermittlung eines Abstands zum Objekt. Bei Verwendung eines geeigneten Auswerteverfahren kann auch eine Formerkennung eines Hindernisses möglich sein. So kann beispielsweise festgestellt werden, ob ein Objekt mit kleinem oder großem Durchmesser berührt wurde oder ob ein ebenes Objekt (z. B. Zaun) ertastet wurde.

Es wird darauf hingewiesen, dass ein Vorhandensein des mindestens einen Sensorarms und dessen Konfiguration hierin unabhängig von einem Vorhandensein und/oder einer Konfiguration der mehreren Schneideinrichtungen, der mehreren Tragarme und/oder der mehreren Stützelemente offenbart ist. Gemäß einem weiteren Aspekt bezieht sich die vorliegende Offenbarung daher auch auf eine Vorrichtung, vorzugsweise autonome Robotervorrichtung, zum Mähen von Gras. Die Vorrichtung weist eine oder mehrere Schneideinrichtungen zum Mähen des Grases auf. Die Vorrichtung weist ferner mindestens einen taktilen Sensorarm auf, der auf einer Längsaußenseite der Vorrichtung zur taktilen Erfassung eines Abstands zwischen der Vorrichtung und einem Objekt (z. B. Pflanze, Baum) neben der Vorrichtung, vorzugsweise ein- und ausschwenkbar, angeordnet ist. Vorzugsweise ist je mindestens ein taktiler Sensorarm an beiden Längsaußenseiten der Vorrichtung umfasst.

Es ist möglich, das die Vorrichtung lediglich einen taktilen Sensorarm aufweist. Damit kann die Vorrichtung bspw. bei besonders beengten Platzverhältnissen in Reihenkulturen (z.B. bei Beeren-Reihenkulturen) exakt zwischen zwei benachbarten Pflanzenreihen navigieren. Beispielsweise kann ein zusätzlicher taktiler Sensorarm, z. B. der auf der linken Längsaußenseite, eine modular ergänzbare Option sein.

In einer Weiterbildung weist die Vorrichtung ferner mindestens ein Sensorarm-Vorspannelement auf, das den mindestens einen taktilen Sensorarm zum Ausschwenken vorspannt. Alternativ oder zusätzlich kann die Vorrichtung einen Elektroantrieb, vorzugsweise ein Gimbal-Elektroantrieb, aufweisen, der antreibend mit dem mindestens einen taktilen Sensorarm zum Ausschwenken des mindestens einen taktilen Sensorarms verbunden ist. Vorzugsweise kann ein Getriebe, besonders bevorzugt ein z. B. einstufiges Planetengetriebe, ein Stirnradgetriebe und/oder ein Riemengetriebe (z. B. mit Zahnriemen), zwischen dem Elektroantrieb und dem taktilen Sensorarm angeordnet (trieblich zwischengeschaltet) sein. Mit dem Getriebe könnte das nötige Motormoment reduziert werden. Das Trägheitsmoment des taktilen Sensorarms (Trägheitsmoment der Last) weist geringe Auswirkungen auf den Antrieb auf.

Es ist möglich, dass ferner ein Dämpfungselement vorgesehen ist, um Schwingungen des Sensorarms an einem Endanschlag zu dämpfen. Das Dämpfungselement kann bspw. am Sensorarm oder am Endanschlag angeordnet sein.

In einer Ausführungsform weist die Vorrichtung ferner einen Winkelsensor auf, der dazu ausgebildet ist einen Schwenkwinkel des mindestens einen taktilen Sensorarms erfasst. Zweckmäßig können bei mehreren Sensorarmen auch mehrere Winkelsensoren umfasst sein, z. B. je ein Winkelsensor pro Sensorarm.

In einer weiteren Ausführungsform weist die Vorrichtung ferner eine Steuereinheit auf, die dazu ausgebildet ist, basierend auf einem Schwenkwinkel des mindestens einen taktilen Sensorarms und/oder einer Winkelgeschwindigkeit einer Schwenkbewegung des mindestens einen taktilen Sensorarms einen Abstand zu dem Objekt zu ermitteln. Vorzugsweise kann die Steuereinheit ferner dazu ausgebildet sein, die Vorrichtung basierend auf dem ermittelten Abstand zu navigieren.

Zweckmäßig kann die Steuereinheit ferner dazu ausgebildet sein, den Abstand zusätzlich basierend auf einer vorbestimmten oder bekannten Länge des taktilen Sensorarms zu ermitteln.

Wie hierin verwendet kann sich der Begriff "Steuereinheit" zweckmäßig auf eine Elektronik beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

In einem Ausführungsbeispiel weist die Vorrichtung ferner mindestens einen Ausleger auf, der auf einer Längsaußenseite der Vorrichtung zweckmäßig ein- und ausschwenkbar ist. Es ist möglich, dass der Ausleger zum Ausschwenken vorgespannt (z. B. federvorgespannt) ist und/oder eine weitere Schneideinrichtung zum Mähen von Gras aufweist. Bevorzugt kann der Ausleger ein, vorzugsweise kreisrundes, drehbares Abwälzelement zum Abwälzen (Abrollen) an Objekten neben der Vorrichtung aufweisen. Das Abwälzelement kann bspw. eine Beschädigung der Objekte verhindern, insbesondere bei dünnen Baumstämmen, wie sie häufig bei neu angelegtem Obstplantagen vorhanden sind.

Es wird darauf hingewiesen, dass ein Vorhandensein des mindestens einen Auslegers und dessen Konfiguration hierin unabhängig von einem Vorhandensein und/oder einer Konfiguration der mehreren Schneideinrichtungen, der mehreren Tragarme und/oder der mehreren Stützelemente offenbart ist. Gemäß einem weiteren Aspekt bezieht sich die vorliegende Offenbarung daher auch auf eine Vorrichtung, vorzugsweise autonome Robotervorrichtung, zum Mähen von Gras. Die Vorrichtung weist eine oder mehrere Schneideinrichtungen zum Mähen des Grases auf. Die Vorrichtung weist ferner mindestens einen Ausleger auf, der auf einer Längsaußenseite der Vorrichtung zweckmäßig ein- und ausschwenkbar ist. Es ist möglich, dass der Ausleger zum Ausschwenken vorgespannt (z. B. federvorgespannt) ist und/oder eine weitere Schneideinrichtung zum Mähen von Gras aufweist. Bevorzugt kann der Ausleger ein, vorzugsweise kreisrundes, drehbares Abwälzelement zum Abwälzen (Abrollen) an Objekten neben der Vorrichtung aufweisen. Das Abwälzelement kann bspw. eine Beschädigung der Objekte verhindern.

Es ist möglich, dass die Vorrichtung einen Elektroantrieb zum Ein- und/oder Ausschwenken des Auslegers aufweist. Beispielsweise kann der Elektroantrieb nur als Notfunktion beim Rangieren oder zur Hindernisüberwindung verwendet werden, vorzugsweise um die Vorrichtung wieder freizufahren. Dementsprechend kann bspw. ein kostengünstiger Elektroantrieb eingesetzt werden, da er nur in Ausnahmefällen verwendet wird.

Es ist möglich, dass der Ausleger und der Sensorarm gekoppelt und/oder in einem Bauteil integriert sind.

In einem weiteren Ausführungsbeispiel ist das Abwälzelement oberhalb der weiteren Schneideinrichtung angeordnet und/oder weist einen Außendurchmesser auf, der größer als ein Außendurchmesser der weiteren Schneideinrichtung ist.

In einer weiteren Ausführungsvariante ist der Ausleger zusätzlich auf- und abschwenkbar gelagert, wobei der Ausleger ein weiteres Stützelement, vorzugsweise ausgebildet als Gleitkufe, zum Abstützen des Auslegers am Untergrund aufweist und vorzugsweise zum Hochschwenken vorgespannt ist (z. B. zur Entlastung des weiteren Stützelements und/oder des Untergrunds).

Vorzugsweise wird die Vorrichtung in landwirtschaftlichen Reihenkulturen zum Mähen von Gras zwischen den einzelnen Pflanzenreihen verwendet. Die Vorrichtung kann sich zweckmäßig parallel zu den Pflanzenreihen bewegen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Seitenansicht einer Vorrichtung zum Mähen von Gras gemäß einem Ausführungsbeispiel der vorliegenden Offenbarung;
- Figur 2: eine Vorderansicht der beispielhaften Vorrichtung zum Mähen von Gras;
- Figur 3: eine Draufsicht auf die beispielhafte Vorrichtung zum Mähen von Gras;
- Figur 4: eine perspektivische Ansicht einer Mäheinrichtung der beispielhaften Vorrichtung zum Mähen von Gras;
- Figur 5: eine Seitenansicht einer Schneideinrichtung der beispielhaften Vorrichtung zum Mähen von Gras;
- Figur 6: eine perspektivische Ansicht eines Auslegerarms der beispielhaften Vorrichtung zum Mähen von Gras; und
- Figur 7: eine schematische Draufsicht auf eine weitere Vorrichtung zum Mähen von Gras gemäß einem Ausführungsbeispiel der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

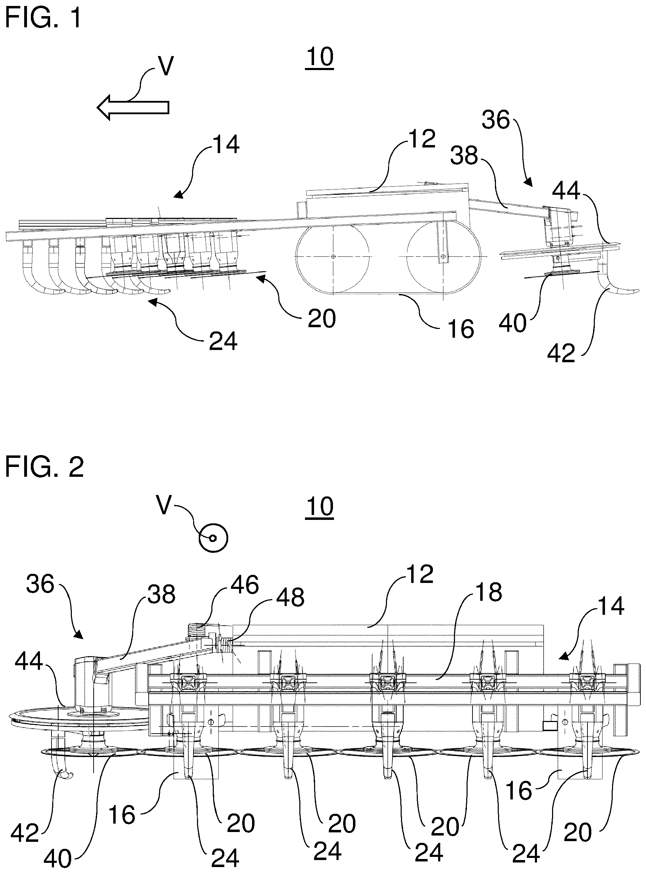

Die Figuren 1 bis 3 zeigen unterschiedliche Ansichten einer Vorrichtung 10 zum Mähen von Gras. Vorzugsweise kann die Vorrichtung 10 zum Mähen von Gras zwischen Pflanzenreihen landwirtschaftlicher Reihenkulturen (zum Beispiel Obstplantage mit Baumreihen) verwendet werden. Es ist allerdings auch möglich, die Vorrichtung 10 zum Mähen einer Freifläche, wie zum Beispiel auf Golfplätzen, einzusetzen. Zweckmäßig ist die Vorrichtung 10 als eine autonome Robotermähvorrichtung ausgebildet, die autonom Rasen mähen und navigieren kann.

Die Vorrichtung 10 weist einen Rahmen oder Hauptkörper 12 und eine Mäheinrichtung 14 auf.

Der Hauptkörper 12 trägt die Mäheinrichtung 14 vor sich her. Der Hauptkörper 12 weist eine Antriebseinheit (nicht dargestellt), z. B. einen Elektromotor, auf. Die Antriebseinheit ist antreibend mit Antriebselementen 16 verbunden. Die Antriebselemente 16 sind an den Längsaußenseiten des Hauptkörpers 12 angeordnet. Wie dargestellt ist, können die Antriebselemente 16 beispielsweise als Raupenantriebseinheiten ausgeführt sein. Es ist allerdings auch möglich, dass Räder als die Antriebselemente 16 verwendet werden. Der Hauptkörper 12 kann ferner zweckmäßig eine Steuereinheit zum Steuern der Vorrichtung 10 aufweisen.

Nachfolgend ist die Mäheinrichtung 14 unter Bezugnahme auf die Figuren 1 bis 4 näher beschrieben.

Die Mäheinrichtung 14 kann bspw. einen rechteckförmigen Rahmen aufweisen, der fest oder schwenkbar mit dem Hauptkörper 12 verbunden ist. Die Mäheinrichtung 14 weist mehrere Schneideinrichtungen 20 auf. Im dargestellten Ausführungsbeispiel sind fünf Schneideinrichtungen 20 umfasst. Die Mäheinrichtung 14 kann allerdings auch mehr oder weniger Schneideinrichtungen 20 aufweisen.

Die Schneideinrichtungen 20 können insbesondere so zueinander angeordnet sein, dass sich Schneidbereiche von benachbarten Schneideinrichtungen 20 teilweise überlappen, sodass kein Rasenstreifen zwischen den Schneideinrichtungen 20 stehen bleibt. Die Überlappung stellt sich hierbei bei der Vorwärtsfahrt der Vorrichtung 10 ein. Die Schneidelemente der Scheineinrichtungen 20 berühren sich hingegen nicht. Der von den Schneideinrichtungen 20 umfasste gemeinsame Schneidbereich kann zweckmäßig auch die Bereiche in Vorwärtsfahrtrichtung V vor den Antriebselementen 16 aufweisen. Die Antriebselemente 16 können die Vorrichtung 10 somit bereits über eine gemähte Rasenfläche bewegen.

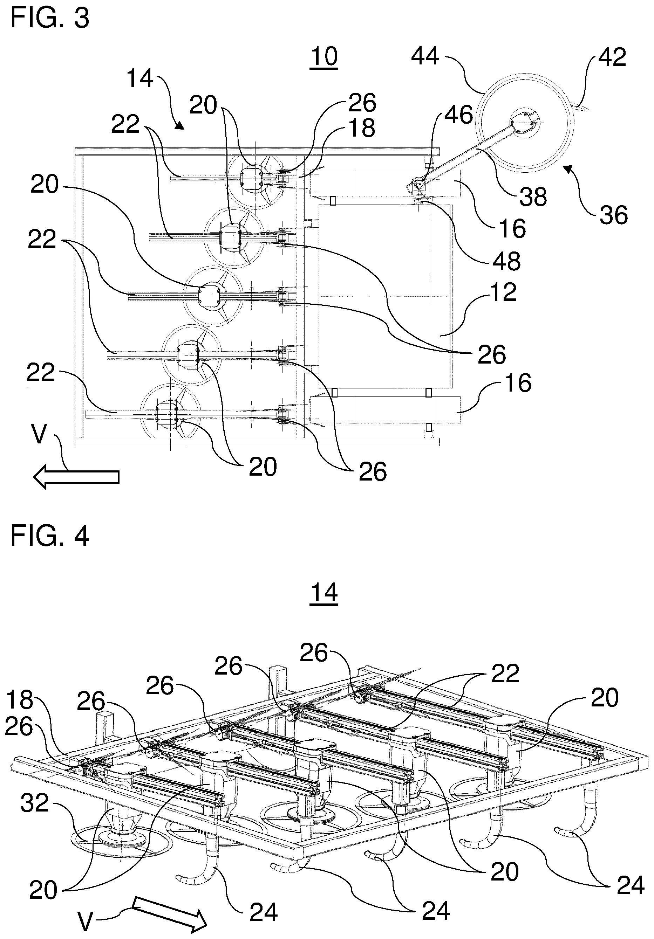

Beispielsweise können die Schneideinrichtungen 20 bezüglich einer Querachse der Vorrichtung 10 und/oder bezüglich einer Längsachse der Vorrichtung 10 versetzt zueinander angeordnet sein. Wie insbesondere in Figur 3 ersichtlich ist, können die Schneideinrichtungen 20 beispielsweise entlang einer Diagonalen der Mäheinrichtung 14 angeordnet sein. Es sind allerdings auch andere Anordnungen denkbar, zum Beispiel eine Anordnung in einer Linienform, einer V-Form, einer umgekehrte V-Form (Pfeilform), einer W-Form, einer M-Form usw.

Vorzugsweise weisen die Schneideinrichtungen 20 alle den gleichen Drehsinn auf. Damit kann verhindert werden, dass sich Grashaufen aus gemähtem Gras zwischen benachbarten Schneideinrichtungen 20 bilden. Es ist allerdings auch möglich, dass bspw. bei einer Pfeilform von der Mitte aus gesehen jeweils nach außen gedreht wird. D.h., Schneideinrichtungen auf einer Seite drehen entgegengesetzt zu Schneideinrichtungen auf der anderen Seite.

Jede Schneideinrichtung 20 ist an einem länglichen Tragarm 22 der Mäheinrichtung 14 getragen. Die Tragarme 22 sind jeweils einzeln auf- und abschwenkbar (hoch- und runterschwenkbar) mit einem Querträger 18 der Mäheinrichtung 14 verbunden. Die Schwenkachsen der Tragarme 22 können parallel zu einer Querachse der Vorrichtung 10 verlaufen. Der Querträger 18 kann beispielsweise direkt oder indirekt an dem Hauptkörper 12 der Vorrichtung 10 befestigt sein. Es ist auch möglich, dass die Tragarme 22 beispielsweise direkt schwenkbar mit dem Hauptkörper 12 verbunden sind. Die schwenkbaren Tragarme 22 bilden zweckmäßig eine Einzelaufhängung für die Schneideinrichtungen 20.

Die Schwenklagerung der Tragarme 22 ist möglichst bodennah positioniert, um ein Risiko zum Aufbocken des Hauptkörpers 12 möglichst gering zu halten. Der Abstand der Schwenklagerungen der Tragarme 22 zum Boden kann vorzugsweise in einem Bereich zwischen 120 mm und 150 mm liegen oder weniger.

An einem der schwenkbaren Lagerung der Tragarme 22 gegenüberliegenden Ende ist jeweils ein Stützelement 24 je Tragarm 22 angeordnet. Bezüglich der Vorwärtsfahrtrichtung V der Vorrichtung 10 sind die Stützelemente 24 vor den Schwenklagerungen der Tragarme 22 und vor den Schneideinrichtungen 20 angeordnet. Die Schneideinrichtungen 20 sind jeweils zwischen der Schwenklagerung des jeweiligen Tragarms 22 und dem jeweiligen Stützelement 24 angeordnet.

Die Stützelemente 24 stützen den jeweiligen schwenkbar gelagerten Tragarm 22 am Untergrund ab. Durch die Stützelemente 24 folgt eine Schwenkbewegung der Tragarme 22 (und der Schneideinrichtungen 20) einer jeweiligen Kontur des Untergrunds, über die sich das jeweilige Stützelement 24 bewegt. Die Schwenkbewegungen der Tragarme 22 sind dabei entkoppelt voneinander, da jeder Tragarm 22 eine eigene Schwenklagerung aufweist und von einem eigenen Stützelement 24 am Untergrund abgestützt ist.

Zur Entlastung der Stützelemente 24 und zur Bodenschonung können die schwenkbar gelagerten Tragarm 22 jeweils mittels eines Vorspannelements 26 in einer Drehrichtung weg vom Untergrund vorgespannt sein. Die Vorspannelemente 26 können bei der Schwenklagerung der Tragarme 22 angeordnet sein. Beispielsweise können die Vorspannelemente 26 als Federelement ausgebildet sein.

Die Stützelemente 24 sind zweckmäßig als Gleitkufen ausgebildet. Die Gleitkufen können beispielsweise hornförmig und gekrümmt sein. Die Stützelemente 24 können drehbar mit den jeweiligen Tragarm 22 verbunden sein. Die drehbare Lagerung der Stützelemente 24 ermöglicht, dass sich die Stützelemente 24 bei Kurvenfahrten mitdrehen können. Die Drehachsen verlaufen hierbei parallel oder schräg zur Hochachse (Vertikalachse) der Vorrichtung 10. Es kann vorteilhaft sein, die Stützelemente 24 so mit den Tragarmen 22 zu verbinden, dass die Drehachsen der Stützelemente 24 leicht schräg bezüglich der Vorwärtsfahrtrichtung V der Vorrichtung 10 nach vorne geneigt sind (nicht dargestellt). Dadurch kann ein Risiko zum Aufbocken des Hauptkörpers 10 durch Hindernisse vor den Stützelementen 24 verringert werden. Zusätzlich können die Schneideinrichtungen 20 auf vorteilhafte Weise bei Kurvenfahrten oder bei einer Rückwärtsfahrt der Vorrichtung 10 leicht angehoben werden. Ein Winkel zwischen einer Hochachse der Vorrichtung 10 und einer Drehachse eines Stützelements 24 kann beispielsweise in einem Bereich zwischen 0° und 15°, vorzugsweise bei rund 5°, liegen.

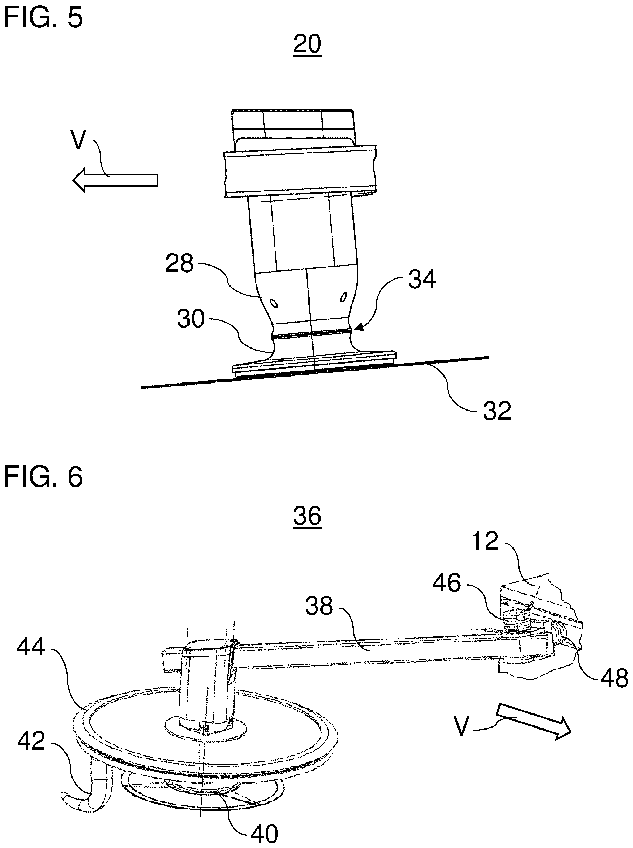

Die Figur 5 zeigt beispielhaft eine der Schneideinrichtungen 20 im Detail, die nachfolgend beschrieben ist.

Die Schneideinrichtungen 20 können einen feststehenden Teil 28 und einen drehbaren Teil 30 aufweisen. Im feststehenden Teil 28 kann beispielsweise ein vorzugsweise bürstenloser Elektromotor zum Antreiben des drehbaren Teils 30 angeordnet sein. Der drehbare Teil 30 kann eines oder mehrere Schneidelemente 32, zum Beispiel Schneidmesser, aufweisen. In den Figuren ist neben den Schneidelementen 32 auch ein durch diese aufgespannter kreisförmiger Schnittbereich dargestellt. Der feststehende Teil 28 kann an dem Tragarm 22 befestigt sein. Der feststehende Teil 28 kann den drehbaren Teil 30 zweckmäßig an einer Unterseite des feststehenden Teils 28 tragen.

Die Schneidelemente 32 sind um eine Drehachse der jeweiligen Schneideinrichtung 20 drehbar. Die Drehachse kann beispielsweise parallel oder schräg zur Hochachse der Vorrichtung 10 verlaufen. Zweckmäßig ist die Drehachse leicht schräg bezüglich der Vorwärtsfahrtrichtung V der Vorrichtung 10 nach vorne geneigt sind. Dadurch erfolgt ein Schnitt des Rasens nur im vorderen Bereich der Schneideinrichtung 20, im hinteren Bereich hingegen nicht. Somit berühren die Schneidelemente 32 den bereits gemähten Rasen nicht oder kaum, sodass weniger (zum Beispiel elektrische) Energie zum Antreiben der Schneidelemente 32 notwendig ist. Ein Winkel zwischen einer Hochachse der Vorrichtung 10 und einer Drehachse der Schneideinrichtung 20 kann beispielsweise in einem Bereich zwischen 0° und 15°, vorzugsweise bei rund 5°, liegen.

Der feststehende Teil 28 und der drehbare Teil 30 sind durch eine Trennfuge 34 voneinander beabstandet. Um ein Umwickeln der Trennfuge 34 durch geschnittene Grashalme zu verhindern, ist die Trennfuge 34 in einem Bereich mit großem Außendurchmesser angeordnet. Der Außendurchmesser kann beispielsweise 50 mm oder mehr betragen, sodass ein Grashalm eine Länge von mehr als 150 mm aufweisen müsste, um sich vollständig um die Trennfuge 34 zu wickeln, zu verknoten und den drehbaren Teil 30 festzusetzen. So kann auch eine dauerhafte Verschmutzung verringert werden. Um die Trennfuge 34 in einem Bereich mit großem Außendurchmesser zu positionieren, erweitern sich sowohl der drehbare Teil 30 als auch der feststehende Teil 28 zur Trennfuge 34 hin. In anderen Worten, ein an die Trennfuge 34 angrenzender Bereich des feststehenden Teils 28 verjüngt sich in einer Richtung weg von der Trennfuge 34. Ebenso verjüngt sich ein an die Trennfuge 34 angrenzender Bereich des drehenden Teils 30 in einer Richtung weg von der Trennfuge 34.

Die Vorrichtung 10 kann optional einen schwenkbaren Ausleger 36 aufweisen, wie in den Figuren 1 bis 4 und 6 bis 7 dargestellt ist. Bei der Verwendung der Vorrichtung 10 in landwirtschaftlichen Reihenkulturen kann mittels des Auslegers 36 ein Bereich zwischen den Pflanzen einer Reihe gemäht werden. Bei der Verwendung der Vorrichtung 10 auf einer Freifläche kann eine durch die Vorrichtung 10 bereitgestellte Schnittbreite durch den Ausleger 36 vergrößert werden.

Die Figur 6 zeigt den Ausleger 36 im Detail. Der Ausleger 36 ist schwenkbar mit dem Hauptkörper 12 verbunden. Der Ausleger 36 kann einen Auslegerarm 38, eine Schneideinrichtung 40, ein Stützelement 42, ein Abwälzelement 44, ein erstes Vorspannelement 46 und/oder ein zweites Vorspannelement 48 aufweisen.

Der Auslegerarm 38 ist an einem Ende seitlich ein- und ausschwenkbar mit dem Hauptkörper 12 verbunden. Der Auslegerarm 38 ist durch das erste Vorspannelement 46 zum Ausschwenken vorgespannt. Der Auslegerarm 38 kann an diesem Ende auch auf- und abschwenkbar mit dem Hauptkörper 12 verbunden sein. Der Auslegerarm 38 ist durch das zweite Vorspannelement 48 zum Hochschwenken vorgespannt, vorzugsweise zur Entlastung des Stützelements 42 und des Untergrunds.

An einem der Schwenklagerung entgegengesetzten Ende trägt der Auslegerarm 38 die Schneideinrichtung 40. Die Schneideinrichtung 40 kann wie die Schneideinrichtungen 20 oder ähnlich dazu ausgebildet sein. Beispielsweise kann die Schneideinrichtung 40 eines oder mehrere um eine Drehachse drehbare Schneidelemente aufweisen, wobei die Drehachse parallel oder bevorzugt nach vorne geneigt bezüglich der Vorwärtsfahrtrichtung V der Vorrichtung 10 ist.

Das Stützelement 42 stützt den Auslegerarm 38 am Boden ab. Beispielsweise kann das Stützelement 42 an einem Trägerelement, das an dem feststehenden Teil der Schneideinrichtung 40 befestigt ist, angebracht sein. Es ist auch möglich, dass das Stützelement 42 direkt am Auslegerarm 38 angebracht ist. Eine Auf- und Abschwenkbewegung des Auslegearms 38 (und damit der Schneideinrichtung 40) folgt einer Kontur des Untergrunds durch die Abstützung des Auslegerarms 38 mittels des Stützelements 42. Das Stützelement 24 kann bezüglich der Vorwärtsfahrtrichtung V der Vorrichtung 10 hinter oder bevorzugt vor der Schneideinrichtung 40 angeordnet sein. Das Stützelement 42 kann wie die Stützelemente 24 oder ähnlich dazu ausgebildet sein. Bspw. kann das Stützelement 42 als zweckmäßig hornförmige und/oder gekrümmte Gleitkufe ausgeführt sein. Eine Hochachse des Stützelements 24 kann parallel zur Hochachse der Vorrichtung 10 sein oder schräg dazu, vorzugsweise leicht nach vorne geneigt (nicht dargestellt).

Das Abwälzelement 44 ist drehbar gelagert und dazu ausgebildet, an Objekten, z. B. Bäumen oder anderen Pflanzen, abzuwälzen bzw. abzurollen. Damit wird einerseits das Objekt nicht beschädigt. Insbesondere können so beispielsweise Pflanzenveredelungsstellen an Bäumen in Obstplantagen geschont werden. Andererseits kann nahe des Objekts durch die Schneideinrichtung 40 gemäht werden und der Auslegerarm 38 sowie die Schneideinrichtung 40 durch das Abwälzelement 44 geführt werden. Das Abwälzelement 44 kann beispielsweise als kreisförmige Scheibe oder als kreisförmiger Ring ausgeführt und drehbar gelagert sein, zum Beispiel an der Schneideinrichtung 40 oder dem Auslegerarm 38. Das Abwälzelement 44 kann oberhalb der Schneideinrichtung 40 angeordnet sein und einen Außendurchmesser aufweisen, der größer als ein Außendurchmesser der Schneideinrichtung 40 ist.

Es ist möglich, dass die Vorrichtung 10 den Ausleger 36 nur auf einer Längsseite (wie dargestellt ist) oder auf beiden Längsseiten der Vorrichtung 10 aufweist.

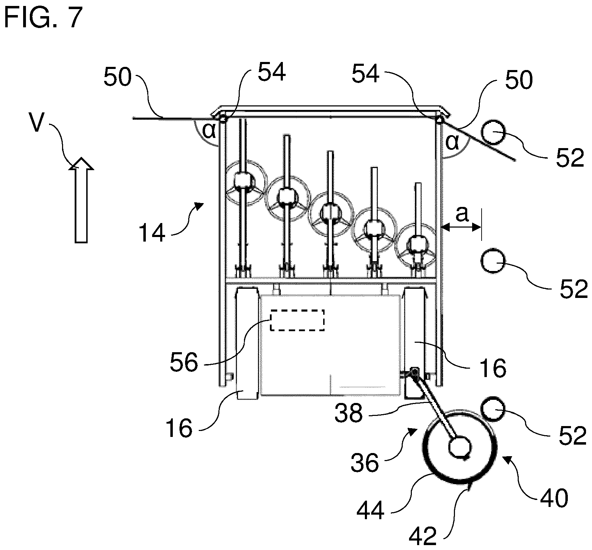

In Figur 7 ist ein modifiziertes Ausführungsbeispiel dargestellt.

Die Vorrichtung 10 weist hier zwei optionale seitliche, taktile Sensorarme 50 auf. Die Sensorarme 50 sind auf beiden Längsaußenseiten der Vorrichtung 10 zur taktilen Erfassung eines Abstands a zwischen der Vorrichtung 10 und einem Objekt 52 neben der Vorrichtung 10 ein- und ausschwenkbar. Bei den Objekten 52 kann es sich bspw. um eine Pflanze einer landwirtschaftlichen Reihenkultur handeln.

Es ist auch möglich, dass die Vorrichtung 10 nur einen taktilen Sensorarm 50 an einer der beiden Längsaußenseiten aufweist. Es wird ferner darauf hingewiesen, dass der taktile Sensorarm 50 auch bei anderen Vorrichtungen, vorzugsweise zum Mähen von Gras, verwendet werden könnte, die sich von der Vorrichtung 10 unterscheiden. Insbesondere kann eine Vorrichtung zum Mähen von Gras den Sensorarm 50 unabhängig von einem Vorhandensein und/oder einer Ausbildung der Mäheinrichtung 14 aufweisen.

Der Sensorarm 50 kann schwenkbar mit dem Hauptkörper 12 verbunden sein. Der Sensorarm 50 kann zum Ausschwenken vorgespannt sein, z. B. mittels einer Feder. Es kann ein Endanschlag vorgesehen sein, der ein maximales Ausschwenken des Sensorarms 50 begrenzt, z. B. auf rund 90° zur Längsachse der Vorrichtung 10. Es kann ferner ein Dämpfungselement (nicht dargestellt) vorgesehen sein, um Schwingungen des Sensorarms 50 am Endanschlag zu dämpfen. Das Dämpfungselement kann am Sensorarm 50 oder am Endanschlag angeordnet sein.

Ein Winkelsensor 54 des Sensorarms 50 kann dazu ausgebildet sein, einen Winkel α zwischen dem Sensorarm 50 und dem Hauptkörper 12 zu erfassen. Der Winkelsensor 54 kann bspw. als ein Drehgeber in Form eines Potentiometers ausgeführt sein. Eine Steuereinheit 56 der Vorrichtung 10 kann aus der bekannten Länge des Sensorarms 50, dem durch den Winkelsensor 54 erfassten Winkel α und zweckmäßig einer Winkelgeschwindigkeit der Schwenkbewegung des Sensorarms 50 den Abstand a zwischen der Vorrichtung 10 und dem Objekt 52 (bzw. der dazugehörigen Objektreihe/Pflanzenreihe) ermitteln. Basierend auf dem ermittelten Abstand a kann die Steuereinheit 56 dazu ausgebildet sein, die Vorrichtung 10 zu navigieren. Zweckmäßig kann so bspw. ein gleichbleibender Abstand zur Objektreihe aus den Objekten (Pflanzen) 52 beim Mähen gehalten werden. Gleichzeitig kann so gewährleistet werden, dass die Schneideinrichtung 40 des Auslegers 36 auch den Bereich zwischen benachbarten Objekten (Pflanzen) 52 derselben Objektreihe erreicht.

Es ist auch möglich, dass alternativ zu der Federvorspannung des Sensorarms 50 ein Elektroantrieb (z. B. ein bürstenloser Elektroantrieb) vorgesehen ist. Der Elektroantrieb kann bspw. als ein Gimbal-Elektroantrieb ausgeführt sein. Der Elektroantrieb kann antreibend mit dem taktilen Sensorarm 50 zum Ausschwenken des Sensorarms 50 verbunden sein. Die Steuereinheit 56 kann den Elektroantrieb mit einer Stellaufgabe ansteuern, die bspw. vorsieht, einen Schwenkwinkel α von 90° einzunehmen. Aus dem sich ergebenden Regelungsaufwand zum Einnehmen des Schwenkwinkels α kann auf den Abstand a geschlossen werden. Es kann ebenso auch eine Winkelmessung mittels der Winkelsensors 54 erfolgen. Die Verwendung des Elektroantriebs kann den Vorteil haben, dass die Sensorarme 50 auf einfache Weise beim Parken der Vorrichtung 10 angelegt werden können und dass auch bei einer Rückwärtsfahrt eine Ermittlung des Abstands a möglich ist.

Es ist auch möglich, dass der Sensorarm 50 als Anzeigegerät oder Navigationselement genutzt werden kann. Bspw. könnte der Sensorarm 50 durch Ausrichtung in eine bestimmte Richtung anzeigen, wohin die Vorrichtung 10 nach dem Start fahren wird, um Unsicherheiten durch den Benutzer zu reduzieren. Der Sensorarm 50 kann auch als Eingabegerät genutzt werden, um beispielsweise die Vorrichtung 10 manuell zu führen, wobei die Vorrichtung 10 sich dabei bspw. selbst antreibt. Damit kann die Vorrichtung von einem Ort zum einem anderen Ort geführt begleitet werden, z. B. bei der Überquerung einer Straße.

Die Vorrichtung 10 kann weitere Komponenten aufweisen, die hier nicht näher erläutert sind. Dazu gehören bspw. ein oder mehrere Kettenvorhänge und/oder andere Schutzverkleidungen zum Abschirmen der Mäheinrichtung 14, der Schneideinrichtungen 20 und/oder der Schneideinrichtung 40. Im Hauptköper 12 kann zweckmäßig auch ein elektrischer Energiespeicher angeordnet sein, der an einer stationären oder mobilen Ladestation aufladbar ist und die elektrischen Systeme der Vorrichtung 10 mit elektrischer Energie versorgt. Es ist auch möglich, dass weitere Sensoren zum Navigieren der Vorrichtung vorgesehen sind, z. B. berührungsempfindliche Sensoren (z. B. Schaltleisten) an einer Vorderseite, einer Rückseite und/oder den Längsaußenseiten der Vorrichtung 10. Die Vorrichtung 10, vorzugsweise der Hauptkörper 12, kann zweckmäßig weitere Systeme zum Navigieren der Vorrichtung 10 aufweisen, z. B. eine satellitengestützte Positionsbestimmungsvorrichtung (z. B. DGPS) und/oder einen Kompass. Die Steuereinheit 56 kann ferner Verfahren der Odometrie zur Schätzung der Position und/oder Lage der Vorrichtung 10 verwenden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Schneideinrichtungen, der Tragarme und/oder der Stützelemente des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Au-ßengrenzen des jeweiligen Bereichs.

### Bezugszeichenliste

- 10: Vorrichtung zum Mähen von Gras
- 12: Hauptkörper
- 14: Mäheinrichtung
- 16: Antriebselement
- 18: Querträger
- 20: Schneideinrichtung
- 22: Tragarm
- 24: Stützelement
- 26: Vorspannelement
- 28: Feststehender Teil
- 30: Drehbarer Teil
- 32: Schneidelement
- 34: Trennfuge
- 36: Ausleger
- 38: Auslegerarm
- 40: Schneideinrichtung
- 42: Stützelement
- 44: Abwälzelement
- 46: Erstes Vorspannelement
- 48: Zweites Vorspannelement
- 50: Sensorarm
- 52: Objekt
- 54: Winkelsensor
- 56: Steuereinheit

- V: Vorwärtsfahrtrichtung
- a: Abstand
- α: Schwenkwinkel

## Patentansprüche

1. Vorrichtung (10), vorzugsweise autonome Robotervorrichtung, zum Mähen von Gras, aufweisend:
mehrere Schneideinrichtungen (20) zum Mähen des Grases;
mehrere Tragarme (22), die versetzt zueinander bezüglich einer Querachse der Vorrichtung (10) angeordnet und jeweils einzeln auf- und abschwenkbar gelagert sind sowie jeweils eine der mehreren Schneideinrichtungen (20) tragen; und
mehrere Stützelemente (24), die jeweils einen der mehreren Tragarme (22) an einem Untergrund abstützen und bezüglich einer Vorwärtsfahrtrichtung (V) der Vorrichtung (10) vor der jeweiligen Schneideinrichtung (20) angeordnet sind,
**dadurch gekennzeichnet, dass** die mehreren Stützelemente (24) als Gleitkufen ausgebildet sind.

2. Vorrichtung (10) nach Anspruch 1, wobei:
die mehreren Stützelemente (24) als hornförmige und/oder gekrümmte Gleitkufen ausgebildet sind.

3. Vorrichtung (10) nach Anspruch 1 oder Anspruch 2, wobei:
die mehreren Stützelemente (24) drehbar mit dem jeweiligen Tragarm (22) verbunden sind,
wobei vorzugsweise:
eine jeweilige Drehachse der mehreren Stützelemente (24) parallel oder schräg zu einer Hochachse der Vorrichtung (10) verläuft, besonders bevorzugt bezüglich der Vorwärtsfahrtrichtung (V) nach vorne geneigt.

4. Vorrichtung (10) nach einem der vorhergehenden Ansprüche, ferner aufweisend:
einen Hauptkörper (12) oder Rahmen, an dem die mehreren Tragarme (22) jeweils einzeln auf- und abschwenkbar gelagert sind und an dem Antriebselemente (16), vorzugsweise Räder oder Raupenantriebe, angebracht sind, die trieblich mit einer Antriebseinheit der Vorrichtung (10) verbunden sind.

5. Vorrichtung (10) nach einem der vorhergehenden Ansprüche, wobei:
die Schwenklagerungen und die mehreren Stützelemente (24) jeweils an entgegengesetzten Endbereichen der mehreren Tragarme (22) angeordnet sind.

6. Vorrichtung (10) nach einem der vorhergehenden Ansprüche, wobei:
die mehreren Schneideinrichtungen (20) jeweils mindestens ein Schneidelement (32) aufweisen, das um eine Schneidachse der jeweiligen Schneideinrichtung (20) drehbar ist, wobei die Schneidachse schräg bezüglich einer Hochachse der Vorrichtung (10) verläuft, vorzugsweise bezüglich der Vorwärtsfahrtrichtung (V) nach vorne geneigt.

7. Vorrichtung (10) nach einem der vorhergehenden Ansprüche, wobei:
die mehreren Schneideinrichtungen (20) jeweils einen feststehenden Teil (28) und einen drehbaren Teil (30) aufweisen, die durch eine Trennfuge (34) voneinander beabstandet sind;
sich ein an die Trennfuge (34) angrenzender Bereich des feststehenden Teils (28) in einer Richtung weg von der Trennfuge (34) verjüngt; und
sich ein an die Trennfuge (34) angrenzender Bereich des drehbaren Teils (30) in einer Richtung weg von der Trennfuge (34) verjüngt.

8. Vorrichtung (10) nach einem der vorhergehenden Ansprüche, ferner aufweisend:
mehrere Tragarm-Vorspannelemente (26), vorzugsweise Federn, die jeweils einem der mehreren Tragarme (22) zugeordnet sind und den jeweiligen Tragarm (22) zum Hochschwenken vorspannen, vorzugsweise zur Entlastung des jeweiligen Stützelements (24) und/oder des Untergrunds.

9. Vorrichtung (10) nach einem der vorhergehenden Ansprüche, ferner aufweisend:
mindestens einen taktilen Sensorarm (50), der auf einer Längsaußenseite der Vorrichtung (10) zur taktilen Erfassung eines Abstands (a) zwischen der Vorrichtung (10) und einem Objekt (52) neben der Vorrichtung (10), vorzugsweise ein- und ausschwenkbar, angeordnet ist,
wobei vorzugsweise:
je ein taktiler Sensorarm (50) an beiden Längsaußenseiten der Vorrichtung (10) umfasst ist.

10. Vorrichtung (10) nach Anspruch 9, ferner aufweisend:
mindestens ein Sensorarm-Vorspannelement (46), das den mindestens einen taktilen Sensorarm (50) zum Ausschwenken vorspannt; und/oder
einen Elektroantrieb, vorzugsweise einen Gimbal-Elektroantrieb, der antreibend mit dem mindestens einen taktilen Sensorarm (50) zum Ausschwenken des mindestens einen taktilen Sensorarms (50) verbunden ist, wobei vorzugsweise ein Getriebe, besonders bevorzugt ein einstufiges Planetengetriebe, ein Stirnradgetriebe und/oder ein Riemengetriebe, zwischen dem Elektroantrieb und dem taktilen Sensorarm angeordnet ist.

11. Vorrichtung (10) nach Anspruch 9 oder Anspruch 10, ferner aufweisend:
einen Winkelsensor (54), der dazu ausgebildet ist, einen Schwenkwinkel (α) des mindestens einen taktilen Sensorarms (50) zu erfassen.

12. Vorrichtung (10) nach einem der Ansprüche 9 bis 11, ferner aufweisend:
eine Steuereinheit (56), die dazu ausgebildet ist, basierend auf einem Schwenkwinkel (α) des mindestens einen taktilen Sensorarms (50) und/oder einer Winkelgeschwindigkeit einer Schwenkbewegung des mindestens einen taktilen Sensorarms (50) den Abstand (a) zu dem Objekt (52) zu ermitteln,
wobei vorzugsweise:
die Steuereinheit (56) ferner dazu ausgebildet ist, die Vorrichtung (10) basierend auf dem ermittelten Abstand (a) zu navigieren.

13. Vorrichtung (10) nach einem der vorhergehenden Ansprüche, ferner aufweisend:
mindestens einen Ausleger (36), der auf einer Längsaußenseite der Vorrichtung (10) ein- und ausschwenkbar ist und eine weitere Schneideinrichtung (40) zum Mähen von Gras aufweist,
wobei vorzugsweise:
der mindestens eine Ausleger (36) zum Ausschwenken vorgespannt ist; und/oder
der mindestens eine Ausleger (36) ein, vorzugsweise kreisrundes, drehbares Abwälzelement (44) zum Abwälzen an Objekten (52) neben der Vorrichtung (10) aufweist.

14. Vorrichtung (10) nach Anspruch 13, wobei:
das Abwälzelement (44) oberhalb der weiteren Schneideinrichtung (40) angeordnet ist und/oder einen Außendurchmesser aufweist, der größer als ein Außendurchmesser der weiteren Schneideinrichtung (40) ist.

15. Vorrichtung (10) nach Anspruch 13 oder 14, wobei:
der Ausleger (36) zusätzlich auf- und abschwenkbar gelagert ist, wobei der Ausleger (36) ein weiteres Stützelement (42), vorzugsweise ausgebildet als Gleitkufe, zum Abstützen des Auslegers (36) am Untergrund aufweist und vorzugsweise zum Hochschwenken vorgespannt ist.

## Claims

1. An apparatus (10), preferably an autonomous robot apparatus, for mowing grass, having:
a plurality of cutting devices (20) for mowing the grass;
a plurality of carrying arms (22) which are arranged offset with respect to one another with regard to a transverse axis of the apparatus (10), and are mounted such that they can be pivoted up and down in each case individually, and carry in each case one of a plurality of cutting devices (20); and
a plurality of supporting elements (24) which support in each case one of the plurality of carrying arms (22) on an underlying surface, and are arranged in front of the respective cutting device (20) with regard to a forward moving direction (V) of the apparatus (10)
**characterized in that** the plurality of supporting elements (24) being configured as runners.

2. The apparatus (10) as claimed in claim 1:
the plurality of supporting elements (24) being configured as runners which are horn-shaped and/or curved.

3. The apparatus (10) as claimed in claim 1 or claim 2:
the plurality of supporting elements (24) being connected rotatably to the respective carrying arm (22),
a respective rotational axis of the plurality of supporting elements (24) preferably running parallel or obliquely with respect to a vertical axis of the apparatus (10), particularly preferably in a manner which is inclined forward with regard to the forward moving direction (V).

4. The apparatus (10) as claimed in one of the preceding claims, having, furthermore:
a main body (12) or frame, on which the plurality of carrying arms (22) are mounted such that they can be pivoted up and down in each case individually, and to which drive elements (16), preferably wheels or caterpillar drives, are attached which are drive-connected to a drive unit of the apparatus (10).

5. The apparatus (10) as claimed in one of the preceding claims:
the pivot bearings and the plurality of supporting elements (24) being arranged in each case on opposite end regions of the plurality of carrying arms (22).

6. The apparatus (10) as claimed in one of the preceding claims:
the plurality of cutting devices (20) having in each case at least one cutting element (32) which can be rotated about a cutting axis of the respective cutting device (20), the cutting axis running obliquely with regard to a vertical axis of the apparatus (10), preferably in a manner which is inclined forward with regard to the forward moving direction (V).

7. The apparatus (10) as claimed in one of the preceding claims:
the plurality of cutting devices (20) in each case having a stationary part (28) and a rotatable part (30) which are spaced apart from one another by way of a parting line (34);
a region of the stationary part (28), which region adjoins the parting line (34), tapering in a direction away from the parting line (34); and
a region of the rotatable part (30), which region adjoins the parting line (34), tapering in a direction away from the parting line (34).

8. The apparatus (10) as claimed in one of the preceding claims, having, furthermore:
a plurality of carrying arm prestressing elements (26), preferably springs, which are assigned to in each case one of the plurality of supporting arms (22) and prestress the respective carrying arm (22) for pivoting up, preferably for relieving the respective supporting element (24) and/or the underlying surface.

9. The apparatus (10) as claimed in one of the preceding claims, having, furthermore:
at least one tactile sensor arm (50) which is arranged, preferably such that it can be pivoted in and out, on a longitudinal outer side of the apparatus (10) for the tactile detection of a spacing (a) between the apparatus (10) and an object (52) next to the apparatus (10),
in each case one tactile sensor arm (50) preferably being included on the two longitudinal outer sides of the apparatus (10).

10. The apparatus (10) as claimed in claim 9, having, furthermore:
at least one sensor arm prestressing element (46) which prestresses the at least one tactile sensor arm (50) for pivoting out; and/or
an electric drive, preferably an electric gimbal drive, which is drive-connected to the at least one tactile sensor arm (50) for pivoting out the at least one tactile sensor arm (50), a mechanism, particularly preferably a single-stage planetary gear mechanism, a spur gear mechanism and/or a belt mechanism, being arranged between the electric drive and the tactile sensor arm.

11. The apparatus (10) as claimed in claim 9 or claim 10, having, furthermore:
an angle sensor (54) which is configured to detect a pivoting angle (α) of the at least one tactile sensor arm (50).

12. The apparatus (10) as claimed in one of claims 9 to 11, having, furthermore:
a control unit (56) which is configured to determine the spacing (a) from the object (52) in a manner which is based on a pivoting angle (α) of the at least one tactile sensor arm (50) and/or an angular velocity of a pivoting movement of the at least one tactile sensor arm (50),
the control unit (56) preferably being configured, furthermore, to navigate the apparatus (10) in a manner which is based on the determined spacing (a).

13. The apparatus (10) as claimed in one of the preceding claims, having, furthermore:
at least one boom (36) which can be pivoted in and out on the longitudinal outer side of the apparatus (10), and has a further cutting device (40) for mowing grass,
the at least one boom (36) preferably being prestressed for pivoting out; and/or
the at least one boom (36) preferably having a rotatable rolling element (44) which is preferably circular for rolling on objects (52) next to the apparatus (10).

14. The apparatus (10) as claimed in claim 13:
the rolling element (44) being arranged above the further cutting device (40) and/or having an external diameter which is greater than an external diameter of the further cutting device (40).

15. The apparatus (10) as claimed in claim 13 or 14:
the boom (36) additionally being mounted such that it can be pivoted up and down, the boom (36) having a further supporting element (42), preferably configured as a runner, for supporting the boom (36) on the underlying surface, and preferably being prestressed for pivoting up.

## Revendications

1. Un dispositif (10), de préférence un dispositif robotique autonome, pour couper l'herbe, présentant :
plusieurs dispositifs de coupe (20) pour couper l'herbe ;
plusieurs bras porteurs (22) qui sont disposés de manière mutuellement décalée par rapport à un axe transversal du dispositif (10) et sont montés respectivement individuellement de manière à pouvoir pivoter vers le haut et vers le bas et portent respectivement un ou plusieurs dispositifs de coupe (20) ; et
plusieurs éléments de soutien (24) qui soutiennent respectivement l'un des plusieurs bras porteurs (22) sur un sol et sont disposés par rapport à un sens de la marche avant (V) du dispositif (10) devant le dispositif de coupe (20) respectif,
**caractérisé en ce que** les plusieurs éléments de soutien (24) sont réalisés sous forme de patins.

2. Le dispositif (10) selon la revendication 1, dans lequel :
les plusieurs éléments de soutien (24) sont réalisés sous forme de patins en forme de corne et/ou courbes.

3. Le dispositif (10) selon la revendication 1 ou la revendication 2, dans lequel :
les plusieurs éléments de soutien (24) sont reliés en rotation au bras porteur (22) respectif,
dans lequel de préférence :
un axe de rotation respectif des plusieurs éléments de soutien (24) s'étend en parallèle ou en biais à un axe vertical du dispositif (10), de manière particulièrement préférée de manière inclinée vers l'avant par rapport au sens de la marche avant (V).

4. Le dispositif (10) selon l'une quelconque des revendications précédentes, présentant en outre :
un corps principal (12) ou cadre sur lequel les plusieurs bras porteurs (22) sont montés respectivement individuellement de manière à pouvoir pivoter vers le haut et vers le bas, et sur lequel des éléments d'entraînement (16), de préférence des roues ou des dispositifs d'entraînement à chenilles, sont fixés qui sont reliés cinématiquement à une unité d'entraînement du dispositif (10).

5. Le dispositif (10) selon l'une quelconque des revendications précédentes, dans lequel :
les paliers pivotants et les plusieurs éléments de soutien (24) sont respectivement disposés dans des zones d'extrémité opposées des plusieurs bras porteurs (22).

6. Le dispositif (10) selon l'une quelconque des revendications précédentes, dans lequel :
les plusieurs dispositifs de coupe (20) présentent respectivement au moins un élément de coupe (32) qui peut tourner autour d'un axe de coupe du dispositif de coupe respectif (20), dans lequel l'axe de coupe s'étend en biais par rapport à un axe vertical du dispositif (10), de préférence de manière inclinée vers l'avant par rapport au sens de la marche avant (V).

7. Le dispositif (10) selon l'une quelconque des revendications précédentes, dans lequel :
les plusieurs dispositifs de coupe (20) présentent respectivement une partie fixe (28) et une partie rotative (30) qui sont espacées l'une de l'autre par une jointure (34) ;
une zone, adjacente à la jointure (34), de la partie fixe (28) s'amincit en s'éloignant de la jointure (34) ; et une zone, adjacente à la jointure (34), de la partie rotative (30) s'amincit en s'éloignant de la jointure (34).

8. Le dispositif (10) selon l'une quelconque des revendications précédentes, présentant en outre :
plusieurs éléments de précontrainte de bras porteur (26), de préférence des ressorts, qui sont associés respectivement à l'un des plusieurs bras porteurs (22) et précontraignent le bras porteur (22) respectif pour le pivotement vers le haut, de préférence pour décharger l'élément de soutien (24) respectif et/ou le sol.

9. Le dispositif (10) selon l'une quelconque des revendications précédentes, présentant en outre :
au moins un bras de capteur tactile (50) qui est disposé sur une face extérieure longitudinale du dispositif (10) pour la détection tactile d'une distance (a) entre le dispositif (10) et un objet (52) à côté du dispositif (10), de préférence de manière à pouvoir pivoter vers l'intérieur et vers l'extérieur,
dans lequel de préférence :
respectivement un bras de capteur tactile (50) est inclus sur les deux faces extérieures longitudinales du dispositif (10).

10. Le dispositif (10) selon la revendication 9, présentant en outre :
au moins un élément de précontrainte de bras de capteur (46) qui précontraint ledit au moins un bras de capteur tactile (50) pour le pivotement vers l'extérieur ; et/ou un dispositif d'entraînement électrique, de préférence un dispositif d'entraînement électrique à la cardan, qui est relié en entraînement audit au moins un bras de capteur tactile (50) pour faire pivoter vers l'extérieur ledit au moins un bras de capteur tactile (50), dans lequel de préférence un engrenage, de manière particulièrement préférée un engrenage planétaire à un étage, un engrenage droit et/ou un engrenage à courroie, est disposé entre le dispositif d'entraînement électrique et le bras de capteur tactile.

11. Le dispositif (10) selon la revendication 9 ou la revendication 10, présentant en outre :
un capteur angulaire (54) qui est réalisé pour détecter un angle de pivotement (α) dudit au moins un bras de capteur tactile (50).

12. Le dispositif (10) selon l'une quelconque des revendications 9 à 11, présentant en outre :
une unité de commande (56) qui est réalisée pour déterminer la distance (a) par rapport à l'objet (52) sur la base d'un angle de pivotement (α) dudit au moins un bras de capteur tactile (50) et/ou d'une vitesse angulaire d'un mouvement pivotant dudit au moins un bras de capteur tactile (50),
dans lequel de préférence :
l'unité de commande (56) est en outre réalisée pour piloter le dispositif (10) sur la base de la distance (a) déterminée.

13. Le dispositif (10) selon l'une quelconque des revendications précédentes, présentant en outre :
au moins une flèche (36) qui peut pivoter vers l'intérieur et vers l'extérieur sur une face extérieure longitudinale du dispositif (10) et présente un dispositif de coupe supplémentaire (40) pour couper l'herbe,
dans lequel de préférence :
ladite au moins une flèche (36) est précontrainte pour pivoter vers l'extérieur ; et/ou
ladite au moins une flèche (36) présente un élément de roulement (44) rotatif, de préférence circulaire, pour rouler sur des objets (52) à côté du dispositif (10).

14. Le dispositif (10) selon la revendication 13, dans lequel :
l'élément de roulement (44) est disposé au-dessus du dispositif de coupe (40) supplémentaire et/ou présente un diamètre extérieur qui est supérieur à un diamètre extérieur du dispositif de coupe supplémentaire (40).

15. Le dispositif (10) selon la revendication 13 ou la revendication 14, dans lequel :
la flèche (36) est montée de plus de manière à pouvoir pivoter vers le haut et vers le bas, la flèche (36) présentant un élément de soutien supplémentaire (42), de préférence réalisé sous forme de patin, pour soutenir la flèche (36) sur le sol, et est de préférence précontrainte pour pivoter vers le haut.
